# EUROPEAN PATENT SPECIFICATION

(11) **EP 2 627 832 B1**
(45) Date of publication and mention of the grant of the patent: **17.12.2014**
(21) Application number: 11788602.8
(22) Date of filing: 14.10.2011
(51) Int. Cl.: E02B 3/12, E02D 29/02

(54) **METHOD FOR FORMING GROUND-COVERING LAYER AND THE GROUND-COVERING LAYER**
VERFAHREN ZUM HERSTELLEN EINER BODENABDECKUNG UND DIE BODENABDECKUNG
PROCEDE DE FABRICATION D'UN REVETEMENT DE SOL ET LE REVETEMENT DE SOL

(30) Priority: 15.10.2010 NL 1038310
(43) Date of publication of application: 21.08.2013
(73) Proprietor: Greenfields B.V., 8281 JX GENEMUIDEN (NL)
(72) Inventor: De Vries, Hugo, 2983 GS Ridderkerk (NL)
(74) Representative: Bartelds, Erik
(86) International application number: PCT/NL2011/050703
(87) International publication number: WO 2012/067500

(56) References cited:
- WO-A1-95/35417
- GB-A- 2 185 769
- US-A- 5 039 250
- US-A1- 2010 254 795

## Description

The invention relates to a method for forming a ground-covering layer. Such a layer can for instance be used to stabilize or protect a ground against erosion.

Already known from the British patent 2.185.769 is a method for forming a ground-covering layer wherein a grid of geotextile is formed. This grid is formed by laying onto each other and connecting to each other a number of strips of a geotextile material, wherein a strip is connected in each case to two adjacent strips at mutually offset locations. When the thus formed package of mutually connected strips is then placed on its edge and pulled apart, a grid is created which defines a number of spaces bounded by the strips. This grid can be placed on a ground surface and the spaces can then be filled, for instance with sand, earth or rubble. The known ground-covering layer is used for instance to stabilize sloping ground surfaces, such as dike bodies. In a variant of the method according to this British patent the grid is glued to a base of geotextile after being folded out, wherein the other side of the base can then be further covered with a water-impermeable layer of plastic. A watertight stabilizing layer is thus obtained.

The known method has the drawback of being relatively complicated and requiring quite a large number of operations. This is particularly the case when it is the desire to obtain a grid closed on the underside.

The invention therefore has for its object to provide a method of the above described type wherein these drawbacks do not occur, or at least do so to lesser extent. According to the invention this is achieved with a method comprising the steps of:
providing a sheet;
forming a number of substantially parallel folds in the sheet; and
urging toward each other and connecting to each other adjacent folds at different locations, wherein the connections of each fold to an adjacent fold on the one side are offset relative to the connections to an adjacent fold on the other side.

By making use of a sheet in which folds can be formed a grid can be formed in much simpler manner than if use is made of separate strips. The spaces formed between the folds are moreover directly closed on the underside by the sheet. A separate groundsheet need not therefore be connected to the grid.

The method preferably further comprises the step of at least partially filling spaces formed between the mutually connected folds with a functional material. This functional material can be a weighting material, such as sand, earth or gravel, but could for instance also be a granular, damping or resilient material such as rubber, polystyrene and the like. The ground-covering layer can thus be readily adapted to the purpose for which it is used.

The connections can be formed in simple manner by glueing the folds locally to each other. It is on the other hand also possible to form the connections by stitching the folds locally to each other. When the sheet is manufactured at least partially from plastic, the connections can also be formed by welding the folds locally to each other, for instance by ultrasonic welding.

Although the connections are a significant factor in stabilizing the ground-covering layer, it may be advantageous to form these connections over only a part of the height of the folds. The part of the folds above the connections can then be used for other functions.

The method can for instance further comprise the step of cutting through at least some of the folds above the connections. Separate upright parts are thus formed.

If the sheet is woven and a density is chosen at the position of at least some of the folds which is lower than between the folds, after being cut through the upright parts can form loose fibres which can for instance serve as artificial grass blades. This can be achieved by arranging fewer warp or weft threads (depending on the orientation of the folds) in the woven material at the position of the folds.

Conversely, it is possible for a second sheet to be laid over the spaces and connected to the severed parts of the folds. A larger area of contact is formed with the sheet lying above by using the severed parts, whereby a strong connection can be effected. The sheet with the folds and the second sheet lying thereabove thus form a closed construction, the spaces of which can be filled with a functional material. This functional material can for instance be a damping material, such as plastic granules, whereby a damping mat is obtained.

With a view to obtaining a stable grid, it can be advantageous for the sheet to be strengthened at the position of at least some of the folds. In the case of a woven sheet this can be achieved in simple manner by locally co-weaving relatively stronger or stiffer warp or weft threads. A non-woven can be strengthened by arranging strengthening threads or strips locally thereon.

The sheet can be manufactured at least partially from natural material. This reduces the environmental impact and the ground-covering layer can be easily recycled after use.

The sheet between the folds can advantageously be manufactured at least partially from biodegradable material. Due to the decomposition of this biodegradable material between the folds openings are thus formed in the sheet after a period of time through which for instance vegetation can grow. The ground-covering layer is thus further secured to the underlying ground by the vegetation, and a natural whole is eventually obtained.

The invention further relates to a ground-covering layer which can be obtained by applying the above described method. Such a layer comprises according to the invention a sheet with a number of substantially parallel folds, which folds are connected at different locations to adjacent folds, wherein the connections of each fold to an adjacent fold on the one side are offset relative to the connections to an adjacent fold on the other side.

Preferred embodiments of the ground-covering layer according to the invention form the subject matter of the sub-claims 13 to 22.

The invention is now elucidated on the basis of a number of embodiments, wherein reference is made to the accompanying drawing in which corresponding components are designated with the same reference numerals, and in which:
Fig. 1 to 5 show the different steps of the method for forming a ground-covering layer according to the invention,
Fig. 6 is a top view of a woven material with locally reduced density,
Fig. 7 and fig. 8 are perspective views of the woven material of fig. 6 after folds have been formed therein and these folds have been cut open,
Fig. 9 is a top view of an alternative embodiment of the ground-covering layer manufactured from a natural material and formed with stitching,
Fig. 10 is a side view of yet another embodiment of the ground-covering layer, wherein the spaces between the folds are closed by a second sheet, and
Fig. 11 is a perspective view of the ground-covering layer in use on a ground surface.

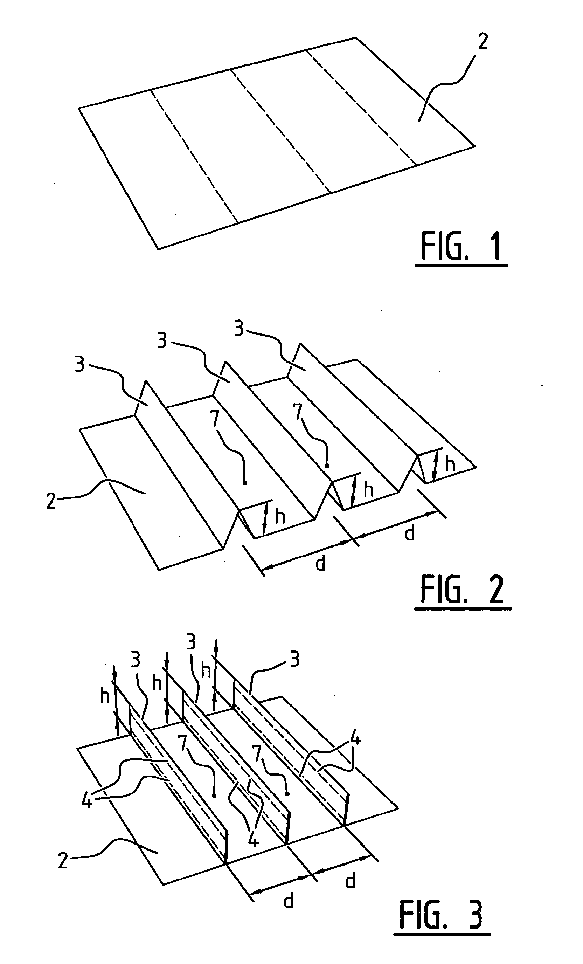

In the method for forming a ground-covering layer 1 according to the invention use is made of a sheet 2 (fig. 1). This sheet 2 can be a woven material, but also a non-woven, and can for instance be a length with a standard width of 4 m as frequently used in the carpet and artificial grass industry. Formed in sheet 2 are a number of parallel folds 3 of substantially equal height ***h*** and at a substantially equal intermediate distance ***d*** (fig. 2). Folds 3 can for instance be formed by guiding the sheet over suitable pleating or folding rollers. Folds 3 are then fixed by for instance being connected to each other at two different levels in longitudinal direction (fig. 3) with the forming of seams 4. Depending on the nature of the material used, folds 3 can be connected by glueing, welding (thermal or ultrasonic), stitching or any other suitable connecting technique.

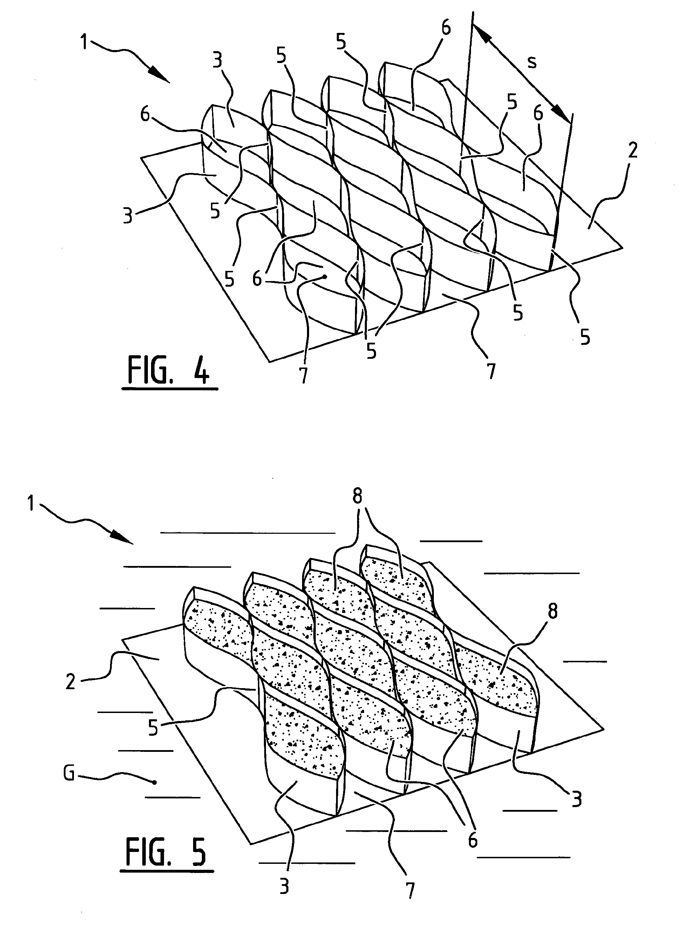

The height ***h*** and intermediate distance ***d*** of folds 3 are adapted to each other such that they can be urged toward and connected to each other locally without too much difficulty (fig. 4). The connections of each fold to an adjacent fold on the one side are here offset relative to the connections to an adjacent fold on the other side, so that a grid is formed. For the purpose of forming the local connections 5 use is once again made of techniques such as glueing, welding or stitching, this time in height direction. The pitch ***s*** between the corresponding connections 5 determines together with the intermediate distance ***d*** the final form of the grid formed by folds 3 and of the spaces 6 between the folds 3 connected locally to each other. The sheet between folds 7 forms a base for spaces 6. When layer 1 has been thus formed, it can be laid on a ground surface G, after which spaces 6 can be filled with a stabilizing or weighting material 8 such as sand, earth or rubble or the like (fig. 5).

In the shown embodiment sheet 2 is a uniform woven material or a non-woven. It is however also possible to envisage sheet 2 being strengthened at the position of folds 3, for instance by using stronger or stiffer warp or weft threads there (depending on the direction of folds 3 in the woven material).

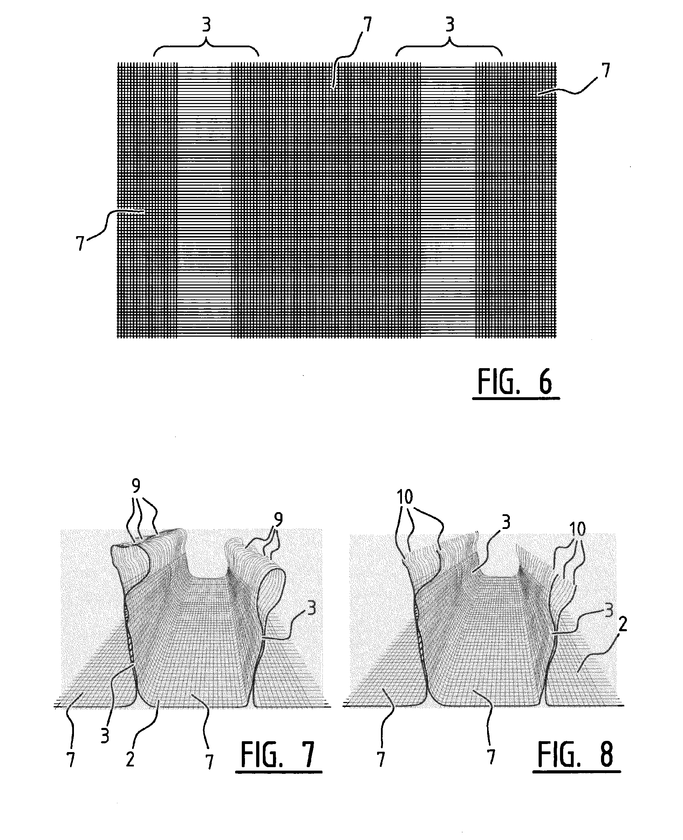

Conversely, it is also possible to give the woven material a less dense form, precisely at the position of folds 3, by omitting warp or weft threads there (fig. 6). After forming and fixing of the folds the remaining weft or warp threads then form pile threads 9 there (fig. 7), which can be cut through to form blades 10. Folds 3 of sheet 2 can be pulled for this purpose over a set of knives. Folds 3 can then be urged toward each other again locally and connected to each other in order to form a grid. Connections 5 then of course extend only over the part of folds 3 lying under the blades. When the woven material is made of green thread, ground-covering layer 1 in this way acquires the appearance of an (artificial) grass field. When layer 1 is applied as stabilizing layer on a loose ground, for instance as verge adjacently of a road, this results in a more natural appearance. If however spaces 6 are filled with a mixture of sand and rubber granules, the ground-covering layer could even be used as artificial grass field for sport or games.

The omission of warp or weft threads at the position of folds 3 is not only important for the purpose of forming blades but also in respect of the draining properties of layer 1. This is because folds 3 hereby become porous on the upper side so that water can sink through folds 3 and can thus be discharged.

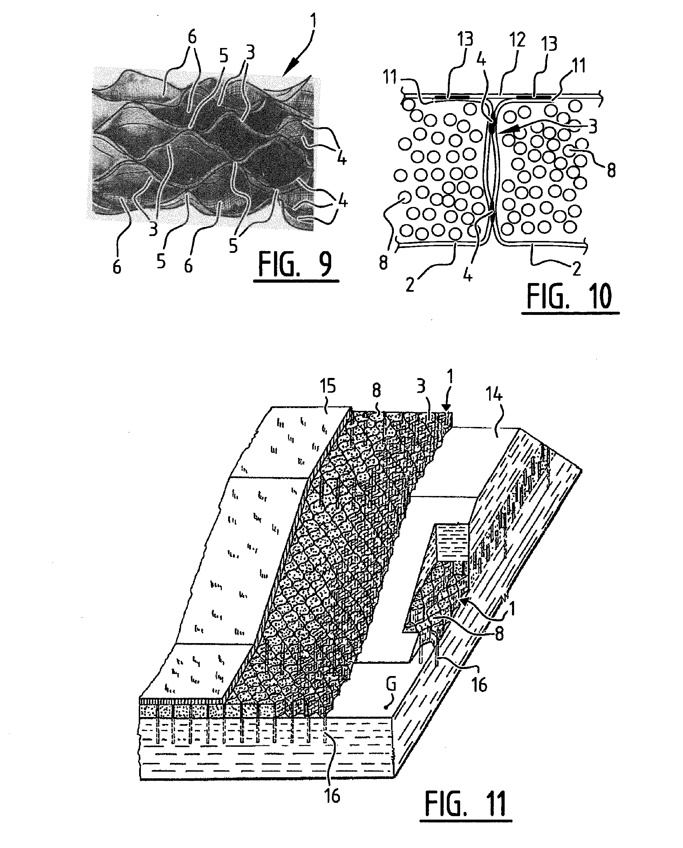

Sheet 2 can be made of plastic, although the use of natural materials, such as jute, can also be envisaged (fig. 9) . In this case the connections are formed by stitching with a thread of natural material. This applies for both the longitudinal connections 4 for fixation of folds 3 and connections 5 in height direction for the purpose of forming the grid.

In yet another embodiment of ground-covering layer 1 according to the invention the folds 3 are likewise cut open after fixing thereof, but are not used as upright blades for embellishing the appearance of layer 1. The cut-open upper ends 11 of folds 3, after the spaces 6 therebetween have been filled with a functional material 8, are instead folded over the filling (fig. 10). A second sheet 12 is then laid over the thus formed ground-covering layer 1 and attached thereto by being welded or glued to the folded ends 11 of folds 3. A layer is thus created with a large number of chambers closed on all sides and bounded by folds 3, the sheet between the folds 7 therebetween functioning as base, and the second sheet 11. The surface available for the weld or glue connections 13 is considerably enlarged by folding the ends 11 of folds 3 away from each other. A granular plastic such as polystyrene granules can for instance be used in this case as filler material 8. Ground-covering layer 1 can then be applied as damping layer, for instance under a sports field or playing field.

As stated, layer 1 can be laid on a ground surface G and then filled with a weighting stabilizing material 8. This filler material 8 can form part of a dike body 14 formed on layer 1 (fig. 11) or of a landscaped top layer 15 arranged over ground-covering layer 1. This figure otherwise further shows how ground-covering layer 1 can be fixed to ground surface G by means of pins 16.

Instead of arranging a layer of vegetation over ground-covering layer 1, it is also possible to opt to allow vegetation to grow on layer 1. Biodegradable materials can for this purpose be incorporated in sheet 2, particularly the sheet between folds 7. When these materials, for instance warp and/or weft threads in the case of a woven material, decompose, openings are created in layer 1 through which plants or grass can grow.

The invention thus provides the option of forming in simple manner in a production line a grid with base which can be used as ground-covering layer. This layer can function as stabilizing layer and can counter erosion of the ground surface. The layer can also be used as playing or sports field, while with a suitable choice of the filler material an application as damping substrate for playing or sports fields can also be envisaged. When the layer is formed from a woven material, the properties of the layer can be varied locally through a suitable choice of warp and/or weft threads. The strength and stiffness of the grid can thus be increased, while in addition the water drainage through the folds - the walls of the grid - can for instance be enhanced. Plants or grass can eventually grow on the layer by embodying a part of the layer in biodegradable material.

Although the invention is described above on the basis of a number of embodiments, it will be apparent that it is not limited thereto. The invention can be varied in many ways within the scope of the following claims.

## Claims

1. Method for forming a ground-covering layer (1), comprising the steps of:
- providing a sheet (2);
- forming a number of substantially parallel folds (3) in the sheet; and
- urging toward each other and connecting to each other adjacent folds (3) at different locations, wherein the connections (5) of each fold to an adjacent fold (3) on the one side are offset relative to the connections (5) to an adjacent fold (3) on the other side.

2. Method as claimed in claim 1, **characterized by** the step of at least partially filling spaces (6) formed between the mutually connected folds (3) with a functional material (8).

3. Method as claimed in claim 1 or 2, **characterized in that** the connections (5) are formed by glueing or stitching the folds locally to each other, or **in that** the sheet (2) is manufactured at least partially from plastic and the connections are formed by welding the folds (3) locally to each other.

4. Method as claimed in any of the foregoing claims, **characterized in that** the connections (5) are formed over only a part of the height of the folds.

5. Method as claimed in claim 4, **characterized by** the step of cutting through at least some of the folds (3) above the connections (5), wherein preferably the sheet (2) is woven and a density is chosen at the position of at least some of the folds (3) which is lower than between the folds (3).

6. Method as claimed in claims 2 and 4, **characterized by** the step of cutting through at least some of the folds (3) above the connections (5), wherein a second sheet (11) is laid over the spaces (6) and connected to the severed parts of the folds (3).

7. Method as claimed in any of the foregoing claims, **characterized in that** the sheet (2) is strengthened at the position of at least some of the folds (3).

8. Method as claimed in any of the foregoing claims, **characterized in that** the sheet (2) is manufactured at least partially from natural material, and/or the sheet between the folds (7) is manufactured at least partially from biodegradable material.

9. Ground-covering layer, comprising a sheet (2) with a number of substantially parallel folds (3), which folds (3) are connected at different locations to adjacent folds, wherein the connections (5) of each fold (3) to an adjacent fold (3) on the one side are offset relative to the connections (5) to an adjacent fold on the other side.

10. Ground-covering layer as claimed in claim 9, **characterized in that** between the mutually connected folds (3) spaces (6) are formed which are at least partially filled with a functional material (8).

11. Ground-covering layer as claimed in claim 9 or 10, **characterized in that** the folds (3) are glued or stitched to each other locally, or **in that** the sheet (2) is manufactured at least partially from plastic and the folds (3) are welded to each other locally.

12. Ground-covering layer as claimed in any of the claims 9 to 11, **characterized in that** the folds (3) are connected to each other over only a part of their height.

13. Ground-covering layer as claimed in claim 12, **characterized in that** at least some of the folds (3) are cut through above the connections (5), wherein preferably the sheet (2) is woven and the woven material at the position of at least some of the folds (3) has a lower density than between the folds.

14. Ground-covering layer as claimed in claims 14 and 19, **characterized in that** at least some of the folds (3) are cut through above the connection and wherein the layer (1) includes a second sheet (11) laid over the spaces (6) and connected to the severed parts of the folds (3).

15. Ground-covering layer as claimed in any of the claims 9 to 14, **characterized in that** the sheet (2) is strengthened at the position of at least some of the folds (3).

16. Ground-covering layer as claimed in any of the claims 9 to 15, **characterized in that** the sheet (2) is manufactured at least partially from natural material, and/or the sheet between the folds (7) is manufactured at least partially from biodegradable material.

## Patentansprüche

1. Verfahren zur Bildung einer Bodenabdeckungsschicht (1), aufweisend die Schritte:
- Bereitstellen eines Blatts (2),
- Bilden einer Anzahl von im Wesentlichen parallelen Falten (3) im Blatt,
- zueinander Bringen und miteinander Verbinden benachbarter Falten (3) an verschiedenen Stellen, wobei die Verbindungen (5) jeder Falte mit einer benachbarten Falte (3) auf der einen Seite relativ zu den Verbindungen (5) mit einer benachbarten Falte (3) auf der anderen Seite versetzt sind.

2. Verfahren nach Anspruch 1, **gekennzeichnet durch** den Schritt eines wenigstens teilweise Füllens von zwischen gegenseitig verbundenen Falten (3) gebildeten Räumen (6) mit einem funktionellen Material (8).

3. Verfahren nach Anspruch 1 oder 2, **dadurch gekennzeichnet, dass** die Verbindungen (5) durch lokales aneinander Kleben oder Heften der Falten gebildet werden, oder dass das Blatt (2) wenigstens teilweise aus Kunststoff hergestellt ist und die Verbindungen durch lokales aneinander Schweißen der Falten (3) gebildet werden.

4. Verfahren nach einem der vorhergehenden Ansprüche, **dadurch gekennzeichnet, dass** die Verbindungen (5) über nur einen Teil der Höhe der Falten gebildet werden.

5. Verfahren nach Anspruch 4, **gekennzeichnet durch** den Schritt eines Durchtrennens wenigstens einiger der Falten (3) über den Verbindungen (5), wobei vorzugsweise das Blatt (2) gewebt ist und eine Dichte an der Position von wenigstens einigen der Falten (3) gewählt wird, die niedriger als zwischen den Falten (3) ist.

6. Verfahren nach den Ansprüchen 2 und 4, **gekennzeichnet durch** den Schritt eines Durchtrennens wenigstens einiger der Falten (3) über den Verbindungen (5), wobei ein zweites Blatt (11) über die Räume (6) gelegt und mit den durchtrennten Teilen der Falten (3) verbunden wird.

7. Verfahren nach einem der vorhergehenden Ansprüche, **dadurch gekennzeichnet, dass** das Blatt (2) an der Position wenigstens einiger der Falten (3) verstärkt ist.

8. Verfahren nach einem der vorhergehenden Ansprüche, **dadurch gekennzeichnet, dass** das Blatt (2) wenigstens teilweise aus natürlichem Material hergestellt ist und/oder das Blatt zwischen den Falten (7) wenigstens teilweise aus bioabbaubarem Material hergestellt ist.

9. Bodenabdeckungschicht, aufweisend ein Blatt (2) mit einer Anzahl von im Wesentlichen parallen Falten (3), welche Falten (3) an verschiedenen Stellen mit benachbarten Falten verbunden sind, wobei die Verbindungen (5) jeder Falte (3) mit einer benachbarten Falte (3) auf der einen Seite relativ zu den Verbindungen (5) mit einer benachbarten Falte auf der anderen Seite versetzt sind.

10. Bodenabdeckungschicht nach Anspruch 9, **dadurch gekennzeichnet, dass** zwischen den gegenseitig verbundenen Falten (3) Räume (6) ausgebildet sind, die wenigstens teilweise mit einem funktionellen Material (8) gefüllt sind.

11. Bodenabdeckungschicht nach Anspruch 9 oder 10, **dadurch gekennzeichnet, dass** die Falten (3) lokal aneinander geklebt oder geheftet sind, oder dass das Blatt (2) wenigstens teilweise aus Kunststoff hergestellt ist und die Falten (3) lokal aneinander geschweißt sind.

12. Bodenabdeckungschicht nach einem der Ansprüche 9 bis 11, **dadurch gekennzeichnet, dass** die Falten (3) über nur einem Teil ihrer Höhe miteinander verbunden sind.

13. Bodenabdeckungschicht nach Anspruch 12, **dadurch gekennzeichnet, dass** wenigstens einige der Falten (3) über den Verbindungen (5) durchtrennt sind, wobei vorzugsweise das Blatt (2) gewebt ist und das gewebte Material an der Position von wenigstens einigen der Falten (3) eine niedrigere Dichte als zwischen den Falten aufweist.

14. Bodenabdeckungschicht nach Ansprüche 14 und 19, **dadurch gekennzeichnet, dass** wenigstens einige der Falten (3) über der Verbindung durchtrennt sind, und wobei die Schicht (1) ein zweites Blatt (11) aufweist, das über die Räume (6) gelegt und mit den durchtrennten Teilen der Falten (3) verbunden ist.

15. Bodenabdeckungschicht nach einem der Ansprüche 9 bis 14, **dadurch gekennzeichnet, dass** das Blatt (2) an der Position wenigstens einiger der Falten (3) verstärkt ist.

16. Bodenabdeckungschicht nach einem der Ansprüche 9 bis 15, **dadurch gekennzeichnet, dass** das Blatt (2) wenigstens teilweise aus natürlichem Material hergestellt ist und/oder das Blatt zwischen den Falten (7) wenigstens teilweise aus bioabbaubarem Material hergestellt ist.

## Revendications

1. Procédé de fabrication d'une couche de recouvrement de sol (1), comprenant les étapes de :
préparation d'une feuille (2) ;
formation d'un certain nombres de plis (3) sensiblement parallèles sur la feuille ; et
application de chacun des plis adjacents (3) l'un vers l'autre et liaison de ceux-ci à différents emplacements, dans lequel les liaisons (5) de chaque pli à un pli adjacent (3) sur un premier côté sont décalées par rapport aux liaisons (5) à un pli adjacent (3) sur l'autre côté.

2. Procédé selon la revendication 1, **caractérisé par** l'étape consistant à remplir au moins partiellement des espaces (6) formés entre les plis (3) reliés mutuellement avec un matériau fonctionnel (8).

3. Procédé selon la revendication 1 ou 2, **caractérisé en ce que** les liaisons (5) sont formées localement par collage ou couture des plis l'un sur l'autre, ou en ce que la feuille (2) est fabriquée au moins partiellement en une matière plastique et les liaisons sont formées localement par soudage des plis (3) l'un sur l'autre.

4. Procédé selon l'une quelconque des revendications précédentes, **caractérisé en ce que** les liaisons (5) sont formées uniquement sur une partie de la hauteur des plis.

5. Procédé selon la revendication 4, **caractérisé par** l'étape de découpe d'au moins certains des plis (3) au-dessus des liaisons (5), dans lequel, de préférence, la feuille (2) est tissée et, à l'emplacement d'au moins certains des plis (3), il est choisi une densité qui est inférieure à celle entre les plis (3).

6. Procédé selon les revendications 2 et 4,
**caractérisé par** l'étape de découpe d'au moins certains des plis (3) au-dessus des liaisons (5), dans lequel la seconde feuille (11) est déposée au-dessus des espaces (6) et reliée aux parties séparées des plis (3).

7. Procédé selon l'une quelconque des revendications précédentes, **caractérisé en ce que** la feuille (2) est renforcée à l'emplacement d'au moins certains des plis (3).

8. Procédé selon l'une quelconque des revendications précédentes, **caractérisé en ce que** la feuille (2) est fabriquée au moins partiellement à partir de matériau naturel, et/ou la feuille entre les plis (7) est fabriquée au moins partiellement en un matériau biodégradable.

9. Couche de recouvrement de sol, comprenant une feuille (2) avec un certain nombre de plis sensiblement parallèles (3), lesquels plis (3) sont reliés à différents emplacements à des plis adjacents, dans laquelle les liaisons (5) de chaque pli (3) à un pli adjacent (3) sur le premier côté sont décalées par rapport aux liaisons (5) à un pli adjacent sur l'autre côté.

10. Couche de recouvrement de sol selon la revendication 9, **caractérisée en ce que**, entre les plis reliés mutuellement (3), il est formé des espaces (6) qui sont au moins partiellement remplis avec un matériau fonctionnel (11).

11. Couche de recouvrement de sol selon la revendication 9 ou 10, **caractérisée en ce que** les plis (3) sont localement collés ou cousus l'un à l'autre, ou **en ce que** la feuille (2) est fabriquée au moins partiellement en matière plastique et les plis (3) sont soudés localement l'un à l'autre.

12. Couche de recouvrement de sol selon l'une quelconque des revendications 9 à 11, **caractérisée en ce que** les plis (3) sont liés l'un à l'autre uniquement sur une partie de leur hauteur.

13. Couche de recouvrement de sol selon la revendication 12, **caractérisée en ce qu'**au moins certains des plis (3) sont découpés au-dessus des liaisons (5), dans laquelle, de préférence, la feuille (2) est tissée et le matériau tissé, à l'emplacement d'au moins certains des plis (3), présente une densité inférieure à celle entre les plis.

14. Couche de recouvrement de sol selon les revendications 14 et 19, **caractérisée en ce qu'**au moins certains des plis (3) sont découpés au-dessus de la liaison et dans laquelle la couche (1) comporte une seconde feuille (11) déposée au-dessus des espaces (6) et reliée aux parties séparées des plis (3).

15. Couche de recouvrement de sol selon l'une quelconque des revendications 9 à 14, **caractérisée en ce que** la feuille (2) est renforcée à l'emplacement d'au moins certains des plis (3).

16. Couche de recouvrement de sol selon l'une quelconque des revendications 9 à 15, **caractérisée en ce que** la feuille (2) est fabriquée au moins partiellement en un matériau naturel, et/ou la feuille entre les plis (7) est fabriquée au moins partiellement en un matériau biodégradable.
